Europäisches Patentamt

European Patent Office

Office européen des brevets

(19)

(11) **EP 0 438 832 B1**

(12) **EUROPEAN PATENT SPECIFICATION**

(45) Date of publication and mention
of the grant of the patent:
**17.04.1996  Bulletin 1996/16**

(51) Int Cl.6: **H04J 14/02**, H04B 10/24

(21) Application number: **90203475.0**

(22) Date of filing: **21.12.1990**

(54) **Coherent optical heterodyne transmission system**

Kohärentes optisches Überlagerungsübertragungssystem

Système de transmission hétérodyne optique cohérent

(84) Designated Contracting States:
**DE FR GB**

(30) Priority: **22.01.1990 NL 9000149**

(43) Date of publication of application:
**31.07.1991  Bulletin 1991/31**

(73) Proprietor: **Philips Electronics N.V.**
**NL-5621 BA Eindhoven (NL)**

(72) Inventors:
• **Kluitmans, Johannes Theresia Marinus**
**NL-5656 AA Eindhoven (NL)**

• **Hooijmans, Pieter Werner**
**NL-5656 AA Eindhoven (NL)**
• **Van de Grijp, Abram**
**NL-5656 AA Eindhoven (NL)**

(74) Representative:
**De Jongh, Cornelis Dominicus et al**
**INTERNATIONAAL OCTROOIBUREAU B.V.,**
**Prof. Holstlaan 6**
**NL-5656 AA Eindhoven (NL)**

(56) References cited:
**EP-A- 0 222 384**        **EP-A- 0 319 242**
**US-A- 3 573 463**

• **PATENT ABSTRACTS OF JAPAN, vol. 9, no. 85**
**(E-308)[1808], 13th April 1985; & JP-A-59 216**
**335 (FUJITSU K.K.) 06-12-1984**

EP 0 438 832 B1

**Description**

The invention relates to a coherent optical heterodyne transmission system comprising at least a first and a second station interconnected by means of a glass fibre, each station comprising an electrooptical converter, an optoelectrical converter and optical coupling means coupling the optoelectrical converter to the glass fibre and which optical coupling means likewise feed a first portion of the light generated by the electrooptical converter to the optoelectrical converter and a second portion of the light generated by the electrooptical converter to the glass fibre; each station comprising modulation means for modulating with an electric modulation signal the light fed to the glass fibre.

The invention likewise relates to a station to be used in a transmission system of this type.

A transmission system according to the opening paragraph is disclosed in European patent application EP-A-0 354,567.

To enable transport of a baseband signal through a glass fibre, in coherent optical transmission systems the baseband signal can amplitude modulate the light signal coming from an electrooptical converter, phase modulate it or frequency modulate it before feeding the light signal to the glass fibre.

To enable demodulation of the light signals at a station with the aid of commercially available electronic components it is necessary to convert the light signal that has a very high frequency (e.g. $10^{14}$ Hz) to a light signal having a much lower intermediate frequency of e.g. $10^9$ Hz. For this purpose the received signal is mixed in the receiver with the aid of an optoelectrical converter with a local light signal generated by an electrooptical converter. This establishes an electrical intermediate frequency signal having a frequency equal to the differential frequency between the frequency of the received light signal and the frequency of the local light signal.

Without further measures being taken each station would need two electrooptical converters for enabling full-duplex transmission, that is, one in each station for generating the light signal to be transmitted and one in each station for generating the local light signal.

In the known transmission system each station comprises no more than a single electrooptical converter for generating both the light signal to be transmitted and the local light signal. A combined light signal is obtained by combining in each station by means of optical coupling means part of the light generated by the electrooptical converter with the received light signal. By feeding this combined light signal to an optoelectrical converter the intermediate-frequency signal is obtained. In this respect it is necessary that the absolute value of the frequency difference between the light signals generated by the two electrooptical converters be equal to the intermediate frequency.

In the known receiver the second portion of the light generated by the electrooptical converter fed to the glass fibre is modulated by means of an optical modulator included in the optical coupling means. Such a modulator is expensive and causes considerable attenuation of the light sent through it.

US patent No. 3,573,463 discloses a station having only one laser per station, without needing an external modulator. In this transceiver the electrical modulation signal is applied to an input to control the laser. Applying this station in the transmission system according to EP-A-0 354 567 would result in a system in which simultaneous transmission by both stations is not possible.

It is an object of the invention to provide a transmission system according to the opening paragraph which allows simultaneous transmission by both stations. Therefore, the invention is characterised in that the modulating means for modulating with an electric modulation signal the light fed to the glass fibre comprises means for controlling the electrooptical converter, and in that at least one of the two stations comprises means for obtaining the modulation signal by modulating a baseband signal on a subcarrier.

The invention is based on the recognition that in the prior art transmission system due to the modulation of both electrooptical converters, the intermediate-frequency signal of each station contains both the signal transmitted by the station concerned and the signal received by the station concerned. It may then happen that the spectrums of the two signals overlap so that they are made inseparable. Due to the modulation of at least one of the baseband signals on a subcarrier according to the invention, the spectrums of the two modulation signals do not overlap. Consequently they can be separated by means of simple filters.

In order to minimize the signal loss during the mixing of the local light signal with the light signal received by a station, it is necessary that the polarisation direction of the received light signal and the polarisation direction of the local light signal are equal. Generally, however, the polarisation direction of the received light signal is indefinite and not constant with time. Without any precautions being taken, the amplitude of the intermediate-frequency signal may vary between a maximum value (when the two polarisation directions are equal) and virtually zero (when the polarisation directions are orthogonal). This problem can generally be solved by introducing polarisation control means in each station, turning the polarisation direction of the received signal in such a way that this polarisation direction coincides with the polarisation direction of the local light signal.

A further embodiment of the invention is characterised in that the optical coupling means retains the polarisation direction and in that polarisation direction control means are included only in the first station between the glass fibre and the optical coupling means.

Since there are only two electrooptical converters present, it will be sufficient for the first station to comprise means for adjusting the polarisation direction so as to equalize the polarisation directions of the light signals generated by the two electrooptical converters. However, the polarisation direction of the light signals in the optical coupling means should be retained.

A further embodiment of the invention is characterised in that only the first station comprises frequency control means for establishing the frequency of the light signal generated by the electrooptical converter on the basis of the frequency of the received light signal and a desired value of a differential frequency. Because only the frequency difference between the two light signals needs to be established, a frequency control circuit in only either of the stations will suffice.

If both the frequency and the polarisation direction control means are arranged in the first station, the second station may be of a very simple structure. The first station may serve as the main station for further stations of a simpler structure (subscribers).

Since all control signals and modulation signals are available in the main station, the behaviour of the whole system can be monitored and controlled from a central point.

The system described can also be used in a half-duplex mode in which only one electrooptical converter is modulated. The latter then has the disposal of the complete intermediate frequency bandwidth for transmission at a higher bit rate.

The invention will now be described with reference to the drawings Figures in which:

Fig. 1 shows an embodiment of the optical transmission system according to the invention;
Fig. 2 shows a frequency diagram to explain the operation of the optical transmission system as shown in Fig. 1.

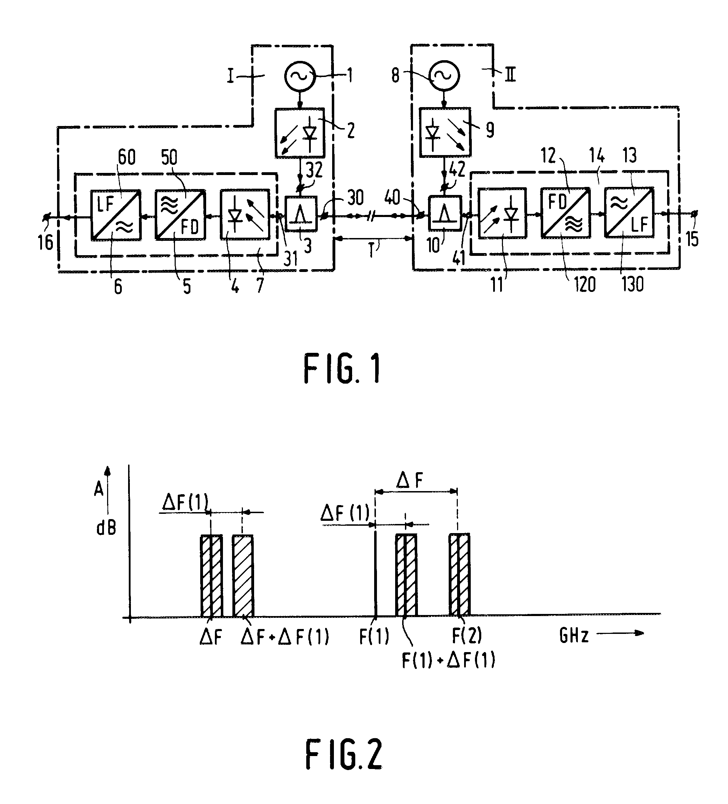

In the coherent optical heterodyne transmission system as shown in Fig. 1, I is the first station and II the second station. The first station I comprises an electrooptical converter being a laser 2 whose control means is connected to a signal source 1 and whose output is connected to a connection point 32 of the optical coupling means 3. The connection point 30 of the optical coupling means 3 is connected to a monomode glass fibre T. The connection point 31 of the optical coupling means 3 is connected to the input of an optoelectrical converter being a photoelectric diode 4, whose output is connected to the input of a low-frequency unit 6 via a band-pass filter 5. The second station II comprises an electrooptical converter being a laser 9 whose control means is connected to a signal source 8 and whose output is connected to the connection point 42 of the optical coupling means 10. The connection point 40 of the optical coupling means 10 is connected to the monomode glass fibre T. The connection point 41 is connected to the input of an electrooptical converter being a photoelectric diode 11 whose output is connected to the input of a low-frequency unit 13 via a band pass filter 12. The combination of the photoelectric diode 4, band-pass filter 5 and the low-frequency unit 6 constitutes the optical receive section 7 of the station I. The combination of the photoelectric diode 11, band-pass filter 12 and the low-frequency unit 13 constitutes the optical receive section 14 of the second station II. The operation of the optical transmission system according to the invention is as follows.

The laser 2 generates a first optical carrier having a frequency F(01) GHz. This optical carrier is FM modulated by means of the electric signal source 1. The optical signal thus obtained satisfies the equation:

$$F(1) = F(01).\{1+m(1).V(1)\} \tag{1}$$

In this equation F(1) is the optical frequency occurring at the output of the laser 2, m(1) the modulation depth and V(1) the electric voltage supplied by the electric signal source 1.

The laser 9 generates a second optical carrier having a frequency F(02) GHz. This optical carrier is modulated by means of the electric signal source 8. The optical signal thus obtained satisfies the equation:

$$F(2) = F(02).\{1+m(2).V(2)\} \tag{2}$$

In this equation F(2) is the optical frequency occurring at the output of the laser 9, m(2) the modulation depth and V(2) the electric voltage supplied by the electric signal source 8.

The optical signals according to equations (1) and (2) are applied to the inputs 32 and 42 of the respective optical coupling means 3 and 10. Part of the optical signal according to equation (1) is transmitted to the receiver 14 of station II as a send signal through the monomode glass fibre T. Another part of the optical signal according to the equation (1) is transmitted to the receiver 7 of station I. Part of the optical signal according to equation (2) is transmitted to the receiver 7 of station I as a send signal through the monomode glass fibre T. Another part of the optical signal according to equation (2) is transmitted to the receiver 14 of station II.

The frequency difference between the two optical signals is selected to be equal to the intermediate frequency $\Delta F$ of the two receivers 7 and 14. Thus the following equation will hold:

$$\Delta F = |F(1)-F(2)| \tag{3}$$

Because the two optical signals F(1) and F(2) are frequency-modulated signals, the intermediate-frequency signal $\Delta F$ in both receivers has the modulation of the two lasers according to:

$$\Delta F = F(01)-F(02)+F(01)m(1).V(1)-F(02).m(2).V(2) \tag{4}$$

After FM detection by means of the two frequency discriminators 5 and 12 this discriminator output after filtering becomes equal to:

$$V(out)=a.F(01).m(1).V(1)-a.F(02).m(2).V(2) \tag{5}$$

The output of the two discriminators is thus equal to the sum of the two modulation signals. In order to avoid the two modulation signals becoming inseparable, at least either of the two baseband signals can, according to the inventive idea, be modulated on a subcarrier. In the exemplary embodiment according to Fig. 2 the baseband signal in station I is modulated on a subcarrier that has a frequency $\Delta F(1)$. This is represented in Fig. 2. Filtering is effected by means of the respective band-pass filters 50 and 120. By means of filters 6 and 13 the desired modulation component is filtered and subsequently amplified at a low frequency.

## Claims

1. Coherent optical heterodyne transmission system comprising at least a first (I) and a second station (II) interconnected by means of a glass fibre (T), each station comprising an electrooptical converter (2;9), an optoelectrical converter (4;11) and optical coupling means (3;10) for coupling the optoelectrical converter (4; 11) to the glass fibre (T) and which optical coupling means (3;10) likewise feed a first portion of the light generated by the electrooptical converter (2;9) to the optoelectrical converter (4;11) and a second portion of the light generated by the electrooptical converter (2;9) to the glass fibre (T); each station (I;II) comprising modulation means (1;8) for modulating the light fed to the glass fibre (T), characterised in that the modulating means (1;8) are arranged for modulating with an electrical modulation signal the light fed to the glass fibre (T) and comprise means (1;8) for controlling the electro-optical converter (2;9), and in that at least one of the two stations (I;II) comprises means for obtaining the modulation signal by modulating a baseband signal on a subcarrier ($\Delta F(1)$).

2. Transmission system as claimed in claim 1, characterised in that the optical coupling means (3;10) retains the polarisation direction and in that polarisation direction control means are included only in the first station (I) between the glass fibre (T) and the optical coupling means (3).

3. Transmission system as claimed in claim 1 or 2, characterised in that only the first station (I) comprises frequency control means for establishing the frequency of the light signal generated by the electrooptical converter (2) on the basis of the frequency of the received light signal and a desired value of a differential frequency.

4. Station (I) for a heterodyne optical transmission system, comprising an electrooptical converter (3), an optoelectrical converter (4) and optical coupling means (3) for coupling the optoelectrical converter (4) to a glass fibre (T) and which optical coupling means (3) likewise are arranged for feeding a first portion of the light generated by the electrooptical converter (2) to the optoelectrical converter (4) and a second portion of the light generated by the electrooptical converter (2) to the glass fibre, the station (I) comprising modulation means (1) for modulating the light fed to the glass fibre (T), characterised in that the modulating means (1) are arranged for modulating with an electric modulation signal the light fed to the glass fibre (T) and comprise means for controlling the electro-optical converter (2) and in that the station (I) comprises means for obtaining the modulation signal by modulating a baseband signal on a subcarrier ($\Delta F(1)$).

## Patentansprüche

1. Kohärentes optisches Überlagerungsübenragungssystem mit wenigstens einer ersten (I) und einer zweiten Station (II), die mittels einer Glasfaser (T) miteinander verbunden sind, wobei jede Station einen elektrooptischen Wandler (2;9), einen optoelektrischen Wandler (4;11) und optische Kopplungsmittel (3;10) aufweist, die den optoelektrischen Wandler (4;11) mit der Glasfaser (T) koppeln und wobei die optischen Kopplungsmittel (3;10) auf ähnliche Weise einen ersten Teil des von dem elektrooptischen Wandler (2;9) erzeugten Lichtes dem optoelektrischen Wandler (4;11) zuführen und einen zweiten Teil des von dem elektrooptischen Wandler (2;9) erzeugten Lichtes der Glasfaser (T) zuführen; wobei jede Station (I;II) Modulationsmittel (1;8) aufweist zum Modulieren des der Glasfaser (T) zugeführten Lichtes, dadurch gekennzeichnet, daß die Modulationsmittel (1;8) zum Modulieren des der Glasfaser (T) zugeführten Lichtes mit einem elektrischen Modulationssignal Mittel (1;8) aufweisen zur Regelung des elektrooptischen Wandlers (2;9), und daß wenigstens eine der beiden Stationen (I;II) Mittel aufweist zum Erhalten des Modulationssignals durch Modulation eines Basisbandsignals auf einem Hilfsträger ($\Delta F(1)$).

2. Übertragungssystem nach Anspruch 1, dadurch gekennzeichnet, daß die optischen Kopplungsmittel (3;10) die Polarisationsrichtung einhalten und daß nur in der ersten Station (I) zwischen der Glasfaser (T) und den optischen Kopplungsmitteln (3) Polarisationsrichtungsteuermittel vorgesehen sind.

3. Übertragungssystem nach Anspruch 1 oder 2, dadurch gekennzeichnet, daß nur die erste Station (I) Frequenzregelmittel aufweist zum Einstellen der Frequenz des von dem elektrooptischen Wandler (2) erzeugten Lichtes auf Basis der Frequenz des empfangenen Lichtsignals und eines gewünschten Wertes einer Differenzfrequenz.

4. Station (I) für ein optisches Überlagerungsübertragungssystem mit einem elektrooptischen Wandler (2), einem optoelektrischen Wandler (4) und optischen Kopplungsmitteln (3) zur Kopplung des optoelektrischen Wandlers (4) mit einer Glasfaser (T) und wobei die optischen Kopplungsmittel (3) auf ähnliche Weise einen ersten Teil des von dem elektrooptischen Wandler (2) erzeugten Lichtes dem optoelektrischen Wandler (4) zuführen und einen zweiten Teil des von dem elektrooptischen Wandler erzeugten Lichtes der Glasfaser zuführen und einen zweiten Teil des von dem elektrooptischen Wandler (2) erzeugten Lichtes der Glasfaser zuführen; wobei die Station (I) Modulationsmittel (1) aufweist zum Modulieren des der Glasfaser (T) zugeführten Lichtes, dadurch gekennzeichnet, daß die Modulationsmittel (1) zum Modulieren des der Glasfaser (T) zugeführten Lichtes mit einem elektrischen Modulationssignal vorgesehen sind und Mittel aufweisen zur regelung des elektrooptischen Wandlers (2) und daß die Station (I) Mittel aufweist zum Erhalten des Modulationssignals durch Modulation eines Basisbandsignals auf einem Hilfsträger ($\Delta$F (1)).

## Revendications

1. Système de transmission hétérodyne optique cohérent comprenant au moins une première (I) et une deuxième (II) stations interconnectées par une fibre de verre (T), chaque station comprenant un convertisseur électro-optique (2; 9), un convertisseur optoélectrique (4; 11) et des moyens de couplage optique (3; 10) couplant le convertisseur optoélectrique (4; 11) à la fibre de verre (T) et lesdits moyens de couplage optique (3; 10) délivrant de la même manière une première fraction de la lumière générée par le convertisseur électro-optique (2; 9) au convertisseur optoélectrique (4; 11) et une deuxième fraction de la lumière générée par le convertisseur électro-optique (2; 9) à la fibre de verre (T), chaque station (I; II) comprenant des moyens de modulation (1; 8) pour moduler la lumière acheminée à la fibre de verre (T), caractérisé en ce que les moyens de modulation (1; 8) sont agencés pour moduler par un signal de modulation électrique la lumière acheminée à la fibre de verre (T) et comprend des moyens (1; 8) pour commander le convertisseur électro-optique (2; 9), et en ce qu'au moins une des deux stations (I; II) comprend un moyen pour obtenir le signal de modulation en modulant un signal en bande de base sur une sous-porteuse ($\Delta$F(1)).

2. Système de transmission selon la revendication 1, caractérisé en ce que les moyens de couplage optique (3; 10) conservent la direction de polarisation et en ce que les moyens de commande de la direction de polarisation sont inclus uniquement dans la première station (I) entre la fibre de verre (T) et les moyens de couplage optique (3).

3. Système de transmission selon la revendication 1 ou 2, caractérisé en ce que seule la première station (I) comprend des moyens de commande de fréquence pour établir la fréquence du signal lumineux généré par le convertisseur électro-optique (2) sur la base de la fréquence du signal lumineux reçu et d'une valeur souhaitée d'une fréquence différentielle.

4. Station (I) pour un système de transmission optique hétérodyne, comprenant un convertisseur électro-optique (2), un convertisseur optoélectrique (4) et des moyens de couplage optique (3) pour coupler le convertisseur optoélectrique (4) à une fibre de verre (T), lesdits moyens de couplage optique (3) étant de la même manière agencés pour acheminer une première fraction de la lumière générée par le convertisseur électro-optique (2) au convertisseur optoélectrique (4) et une deuxième fraction de la lumière générée par le convertisseur élecro-optique (2) à la fibre de verre (T), la station (I) comprenant des moyens de modulation (1) pour moduler la lumière acheminée à la fibre de verre (T), caractérisée en ce que les moyens de modulation (1) sont agencés pour moduler par un signal de modulation électrique la lumière acheminée à la fibre de verre (T) et comprennent des moyens pour commander le convertisseur électro-optique (2), et en ce que la station (I) comprend des moyens pour obtenir le signal de modulation en modulant un signal en bande de base sur une sous-porteuse ($\Delta$F(1)).

FIG. 1

FIG.2